Europäisches Patentamt

European Patent Office

Office européen des brevets

(19)

(11) Veröffentlichungsnummer : **0 349 768 B1**

(12) # EUROPÄISCHE PATENTSCHRIFT

(45) Veröffentlichungstag der Patentschrift :
**29.04.92 Patentblatt 92/18**

(51) Int. Cl.$^5$ : **B01D 53/36**

(21) Anmeldenummer : **89109990.5**

(22) Anmeldetag : **02.06.89**

(54) **Verfahren zur Entfernung von Phosphorwasserstoff aus Abluft.**

(30) Priorität : **06.07.88 DE 3822777**

(43) Veröffentlichungstag der Anmeldung :
**10.01.90 Patentblatt 90/02**

(45) Bekanntmachung des Hinweises auf die
Patenterteilung :
**29.04.92 Patentblatt 92/18**

(84) Benannte Vertragsstaaten :
**AT BE CH DE FR GB LI NL**

(56) Entgegenhaltungen :
**EP-A- 0 194 366**
**DD-A- 153 801**
**JOURNAL OF APPLIED CHEMISTRY U.S.S.R.**

(73) Patentinhaber : **HOECHST
AKTIENGESELLSCHAFT
Postfach 80 03 20
W-6230 Frankfurt am Main 80 (DE)**

(72) Erfinder : **Svara, Jürgen, Dr.
Mainstrasse 36
W-5000 Köln (DE)**
Erfinder : **Thümmler, Ursus, Dr.
Am Kapellenbusch 27
W-5042 Erftstadt (DE)**

## Beschreibung

Die vorliegende Erfindung betrifft ein Verfahren zur Entfernung von Phosphorwasserstoff aus Abluft durch katalytische Oxidation.

Wenn Phosphor oder seine Verbindungen mit niedriger Oxidationsstufe an bei erhöhter Temperatur ablaufenden chemischen Prozessen beteiligt sind, entsteht Phosphorwasserstoff ($PH_3$). Phosphorwasserstoff entsteht auch, wenn Alkali- oder Erdalkaliphosphide mit Feuchtigkeit in Berührung kommen, wovon bei der Schädlingsbekämpfung, insbesondere im Rahmen der Getreidelagerung, Gebrauch gemacht wird.

Phosphorwasserstoff ist ein oxidationsempfindliches und toxisches Gas, welches sich in höheren Konzentrationen an der Luft spontan entzündet, während es in niedriger Konzentration bei Raumtemperatur, d.h. unterhalb seines Zündpunktes, eine erstaunlich hohe Beständigkeit aufweist. Einmal in die Umwelt abgegeben wird es dort wahrscheinlich photochemisch zu Oxidationsprodukten des Phosphors umgesetzt.

Wegen der Toxizität des Phosphorwasserstoffs schreibt der Gesetzgeber neuerdings vor, daß in Abluft maximal 1 ppm $PH_3$ enthalten sein darf. Daher sind bereits verschiedene Verfahren entwickelt worden, um Phosphorwasserstoff aus Gasen zu entfernen.

So ist aus der DE-C- 715 678 ein Verfahren zur Entfernung von Phosphorwasserstoff aus Gasen bekannt, bei welchem das Phosphorwasserstoff enthaltende Gas mit 80 bis 100 %iger Schwefelsäure gewaschen wird, wobei die Regenerierung der Schwefelsäure außerhalb der Waschvorrichtung mit einem Oxidationsmittel wie Wasserstoffperoxid, Chromsäure oder Salpetersäure oder mit Luftsauerstoff in Anwesenheit von Katalysatoren erfolgt.

Weiterhin ist bekannt, daß Phosphorwasserstoff mit Luft bei Temperaturen ab 800°C schnell oxidiert wird.

Schließlich kann Phosphorwasssserstoff an porösen Trägern wie Aktivkohlen oder Molekularsieben absorbiert werden. Sind die porösen Träger mit Metallsalzen, beispielsweise des Silbers oder Kupfers, imprägniert, so wird der Phosphorwasserstoff katalytisch oxidiert (vergl. BOGDANOW et al. in "Zhurnal Prikladnoi Khimii", Band 60, Nr. 5, Seiten 1119 bis 1123, 1987; HALL et al. in "Carbon", Band 23, Nr. 4, Seiten 353 bis 371, 1985).

Bei den genannten Verfahren ist von Nachteil, daß sie entweder laufende Wartungsarbeiten (Trocknung des Gasgemisches vor der Waschung mit Mineralsäure) oder aufwendige Einrichtungen (energieintensive spezielle Muffelöfen) oder hohe Betriebskosten (häufige Erneuerung der porösen Träger) erfordern.

Es ist daher Aufgabe der vorliegenden Erfindung, ein Verfahren zur Entfernung von Phosphorwasserstoff aus Abluft anzugeben, welches bei nur geringfügig erhöhter Temperatur mit minimalem Aufwand apparativ einfach durchführbar ist.Das wird erfindungsgemäß dadurch erreicht, daß man die Phosphorwasserstoff enthaltende Abluft bei Temperaturen von 50 bis 350°C, vorzugsweise von 150 bis 300°C, über einen Katalysator leitet, welcher mindestens an seiner Oberfläche aus mindestens einem Metall besteht, das in 1 molarer saurer wäßriger Lösung ein mindestens 200 mV positiveres Potential als die Normal-Wasserstoffelektrode aufweist.

Das Verfahren gemäß der Erfindung kann weiterhin wahlweise auch noch dadurch ausgestaltet sein, daß
a) sich das ein mindestens 200 mV positiveres Potential als die Normal-Wasserstoffelektrode aufweisende Metall auf einem metallischen Träger befindet;
b) der metallische Träger aus Eisen oder seinen Legierungen besteht;
c) das ein mindestens 200 mV positiveres Potential als die Normal-Wasserstoffelektrode aufweisende Metall auf einen nichtporösen, nichtmetallischen Träger aufgebracht ist;
d) der nichtmetallische Träger aus keramischem Material besteht;
e) das ein mindestens 200 mV positiveres Potential als die Normal-Wasserstoffelektrode aufweisende Metall Kupfer oder seine Legierungen sind;
f) das ein mindestens 200 mV positiveres Potential als die Normal-Wasserstoffelektrode aufweisende Metall Silber ist.
g) das ein mindestens 200 mV positiveres Potential als die Normal-Wasserstoffelektrode aufweisende Metall Gold ist;
h) das ein mindestens 200 mV positiveres Potential als die Normal-Wasserstoffelektrode aufweisende Metall mindestens ein Platinmetall ist.

Mit dem erfindungsgemäßen Verfahrren ist es möglich, Phosphorwasserstoff bei geringem Wartungsaufwand auch aus großen Volumenströmen zu entfernen.

Das Verfahren gemäß der Erfindung gewährleistet bei geringen Investitions- und Betriebskosten eine sichere Entfernung von Phosphorwasserstoff aus Abluft.

Schließlich kann phosphorwasserstoffhaltige Abluft einen beträchtlichen Anteil Wasserdampf, Staub und Aerosole enthalten, ohne die Wirksamkeit des erfindungsgemäßen Verfahrens zu beeinträchtigen.

Die mit dem Verfahren gemäß der Erfindung erreichbaren Vorteile werden anhand der Beispiele 5 bis 13 aufgezeigt.

Die den Beispielen wurde eine etwa 40 cm lange, von außen beheizbare Kolonne mit einem Durchmesser von etwa 30 mm verwendet, in welche ein angefeuchtetes, ca. 40°C warmes $PH_3$-Luft-Gemisch eingeleitet wurde. Der $PH_3$-Gehalt wurde am Eingang ($C_{ein}$) und am Ausgang ($C_{aus}$) der Kolonne ermittelt. Die Temperatur, auf welche die Kolonne aufgeheizt worden war, wurde an deren Oberfläche gemessen ($T_{Mantel}$). Mit $T_{aus}$ ist die Temperatur des die Kolonne verlassenden Gasgemisches bezeichnet.

Die Konzentrationen wurden - sofern nicht anderes angegeben - in der genannten Reihenfolge hintereinander im Abstand von 15 Minuten bestimmt.

Beispiel 1 (Vergleichsbeispiel)

Die Kolonne war mit 79,8 g entfetteten Stahlspänen (Werkstoffnummer 1.4571 gemäß DIN 17440, Dezember 1972) gefüllt. Durch die Kolonne wurden 700 l/h $PH_3$-Luft-Gemisch geleitet.

$$T_{Mantel} = 200°C$$

| $C_{ein}$ [ppm] | $C_{aus}$ [ppm] | $T_{aus}$ [°C] |
|---|---|---|
| 1500 | 1500 | 58 |
| 220 | 220 | 93 |
| 350 | 300 | 91 |

Beispiel 2 (Vergleichsbeispiel)

Beispiel 1 wurde mit der Änderung wiederholt, daß 350 l/h $PH_3$-Luft-Gemisch durch die Kolonne geleitet wurden.

| $C_{ein}$ [ppm] | $C_{aus}$ [ppm] | $T_{aus}$ [°C] |
|---|---|---|
| 190 | 150 | 86 |
| 30 | 60 | 77 |

Beispiel 3 (Vergleichsbeispiel)

Beispiel 2 wurde mit der Änderung wiederholt, daß $T_{Mantel}$ auf 250°C erhöht wurde.

| $C_{ein}$ [ppm] | $C_{aus}$ [ppm] | $T_{aus}$ [°C] |
|---|---|---|
| 70 | 70 | 82 |

Beispiel 4 (Vergleichsbeispiel)

Die Kolonne war mit 50 g vernickelter Kupferwolle gefüllt. Durch die Kolonne wurden 350 l/h $PH_3$-Luft-Gemisch geleitet.

a)   $T_{Mantel}$ = 150°C

| $C_{ein}$ [ppm] | $C_{aus}$ [ppm] | $T_{aus}$ [°C] |
|---|---|---|
| 30 | 60 | 61 |
| 520 | 490 | 64 |
| 470 | 440 | 62 |

b)   $T_{Mantel}$ = 200°C

| $C_{ein}$ [ppm] | $C_{aus}$ [ppm] | $T_{aus}$ [°C] |
|---|---|---|
| 430 | 390 | 78 |

c)   $T_{Mantel}$ = 250°C

| $C_{ein}$ [ppm] | $C_{aus}$ [ppm] | $T_{aus}$ [°C] |
|---|---|---|
| 380 | 70 | 92 |
| 380 | 75 | 90 |
| 350 | 60 | 93 |

Anmerkung: Die sich von a) bis c) verbessernde Wirkung beruht offensichtlich neben der Erhöhung der Temperatur auf der zumindest teilweise Oxidation der Nickelschicht, wodurch Kupferoberfläche teilweise freigelegt wird.

Beispiel 5 (gemäß der Erfindung)

Die Kolonne war mit 75 g vergoldeten Stahlspänen (Stahl der Werkstoffnummer 1.4571 gemäß DIN 17440, Dezember 1972) gefüllt.
Durch die Kolonne wurden 350 l/h $PH_3$-Luft-Gemisch geleitet.

a)    $T_{Mantel}$ = 150°C

| $C_{ein}$ [ppm] | $C_{aus}$ [ppm] | $T_{aus}$ [°C] |
|---|---|---|
| 80 | 50 | 63 |
| 1300 | 700 | 67 |
| 300 | 20 | 58 |

b)    $T_{Mantel}$ = 200°C

| $C_{ein}$ [ppm] | $C_{aus}$ [ppm] | $T_{aus}$ [°C] |
|---|---|---|
| 820 | 80 | 73 |
| 250 | 25 | 73 |
| 320 | 120 | 82 |
| 310 | 100 | 81 |
| 850 | 450 | 83 |

c)    $T_{Mantel}$ = 250°C

| $C_{ein}$ [ppm] | $C_{aus}$ [ppm] | $T_{aus}$ [°C] |
|---|---|---|
| 2000 | 620 | 78 |
| 1400 | 550 | 82 |
| 220 | 60 | 84 |

Beispiel 6 (gemäß der Erfindung)

Die Kolonne war mit 75 g verkupferten Stahlspänen (Stahl der Werkstoffnummer 1.4571 gemäß DIN 17440, Dezember 1972) gefüllt.
Durch die Kolonne wurden 350 l/h $PH_3$-Luft-Gemisch geleitet.

a)    $T_{Mantel}$ = 150°C

| $C_{ein}$ [ppm] | $C_{aus}$ [ppm] | $T_{aus}$ [°C] |
|---|---|---|
| 75 | 15 | 58 |
| 670 | 420 | 60 |
| 250 | 20 | 65 |

b) $T_{Mantel} = 200°C$

| $C_{ein}$ [ppm] | $C_{aus}$ [ppm] | $T_{aus}$ [°C] |
|---|---|---|
| 200 | 25 | 54 |
| 600 | 40 | 70 |
| 820 | 80 | 61 |

c) $T_{Mantel} = 250°C$

| $C_{ein}$ [ppm] | $C_{aus}$ [ppm] | $T_{aus}$ [°C] |
|---|---|---|
| 1400 | 230 | 78 |
| 610 | 120 | 88 |
| 100 | 2 | 88 |

Beispiel 7 (gemäß der Erfindung)

Die Kolonne war mit 55,3 g versilberter Kupferwolle gefüllt.
Durch die Kolonne wurden 350 l/h $PH_3$-Luft-Gemisch geleitet.

a) $T_{Mantel} = 150°C$

| $C_{ein}$ [ppm] | $C_{aus}$ [ppm] | $T_{aus}$ [°C] |
|---|---|---|
| 350 | 20 | 51 |
| 380 | 20 | 55 |
| 420 | 30 | 57 |
| 370 | 20 | 56 |
| 3000 | 300 | 56 |
| 700 | 25 | 56 |

b) $T_{Mantel} = 200°C$

| $C_{ein}$ [ppm] | $C_{aus}$ [ppm] | $T_{aus}$ [°C] |
|---|---|---|
| 3000 | 25 | 68 |
| 190 | 0,5 | 65 |
| 450 | 11 | 62 |
| 750 | 17 | 58 |
| 1700 | 30 | 53 |

c) $T_{Mantel} = 250°C$

| $C_{ein}$ [ppm] | $C_{aus}$ [ppm] | $T_{aus}$ [°C] |
|---|---|---|
| 1200 | 10 | 78 |
| 160 | 0,6 | 80 |
| 580 | 6 | 79 |
| 1900 | 50 | 82 |
| 350 | 1,2 | 80 |

Beispiel 8 (gemäß der Erfindung)

Die Kolonne war mit 50,5 g entfetteter Kupferwolle gefüllt. Durch die Kolonne werden 350 l/h $PH_3$-Luft-Gemsich geleitet.

a) $T_{Mantel} = 150°C$

| $C_{ein}$ [ppm] | $C_{aus}$ [ppm] | $T_{aus}$ [°C] |
|---|---|---|
| 210 | 10 | 60 |
| 1500 | 180 | 63 |
| 80 | 0,5 | 68 |
| 650 | 3,5 | 68 |
| 250 | 11 | 70 |

b) $T_{Mantel} = 200°C$

| $C_{ein}$ [ppm] | $C_{aus}$ [ppm] | $T_{aus}$ [°C] |
|---|---|---|
| 260 | 0 | 79 |
| 1200 | 0,5 | 78 |
| 420 | 0 | 79 |
| 4000 | 0,2 | 80 |

Beispiel 9 (gemäß der Erfindung)

Beispiel 8 b wurde mit der Änderung wiederholt, daß 700 l/h $PH_3$-Luft-Gemisch durch die Kolonne geleitet wurden.

| $C_{ein}$ [ppm] | $C_{aus}$ [ppm] | $T_{aus}$ [°C] |
|---|---|---|
| 2500 | 15 | 99 |
| 630 | 4 | 98 |
| 130 | 0,2 | 98 |
| 300 | 10 | 95 |
| 320 | 10 | 90 |
| 1000 | 10 | 93 |
| 650 | 10 | 93 |
| 200 | 10 | 95 |

Beispiel 10 (gemäß der Erfindung)

Die Kolonne war mit 240 g Kupferkatalysator 60/35 in Tablettenform (HOECHST AG) gefüllt. Durch die Kolonne wurden 350 l/h $PH_3$-Luft-Gemisch geleitet.

$$T_{Mantel} = 200°C$$

| $C_{ein}$ [ppm] | $C_{aus}$ [ppm] | $T_{aus}$ [°C] |
|---|---|---|
| 420 | 0 | 69 |
| 1000 | 0 | 70 |
| 1500 | 0 | 73 |

**Beispiel 11 (gemäß der Erfindung)**

Beispiel 10 wurde mit der Änderung wiederholt, daß bei abweichender Manteltemperatur 700 l/h $PH_3$-Luft-Gemisch durch die Kolonne geleitet wurden.

$$T_{Mantel} = 150°C$$

| $C_{ein}$ [ppm] | $C_{aus}$ [ppm] | $T_{aus}$ [°C] |
|---|---|---|
| 900 | 1 | 89 |
| 400 | 0,1 | 84 |
| 2500 | 80 | 90 |
| 1300 | 12 | 89 |

**Beispiel 12 (gemäß der Erfindung)**

Die Kolonne war mit 103 g Calciumsilikat (Penta 77) mit einem Kupfergehalt von 3 % gefüllt. Durch die Kolonne wurden 350 l/h $PH_3$-Luft Gemisch geleitet.

$$T_{Mantel} = 200°C$$

| $C_{ein}$ [ppm] | $C_{aus}$ [ppm] | $T_{aus}$ [°C] |
|---|---|---|
| 1150 | 10 | 68 |
| 1350 | 80 | 75 |
| 50 | 30 | 72 |
| 100 | 10 | 61 |

**Beispiel 13 (gemäß der Erfindung)**

Beispiel 12 wurde die mit der Änderung wiederholt, daß die Kolonne mit 130 g Calciumsilikat (Penta 77) mit einem Kupfergehalt von 40 % gefüllt war.
Die Konzentrationen wurden in der genannten Reihenfolge - abweichend von den übrigen Beispielen - im Abstand von 2 Stunden bestimmt.

| $C_{ein}$ [ppm] | $C_{aus}$ [ppm] | $T_{aus}$ [°C] |
|---|---|---|
| 1100 | 0 | 82 |
| 1200 | 0 | 83 |
| 1200 | 0 | 80 |
| 1200 | 0 | 83 |
| 1200 | 0 | 83 |
| 1400 | 0,5 | 80 |
| 1800 | 3 | 83 |

## Patentansprüche

1. Verfahren zur Entfernung von Phosphorwasserstoff aus Abluft durch katalytische Oxidation, dadurch gekennzeichnet, daß man die Phosphorwasserstoff enthaltende Abluft bei Temperaturen von 50 bis 350°C, vorzugsweise von 150 bis 300°C, über einen Katalysator leitet, welcher mindestens an seiner Oberfläche aus mindestens einem Metall besteht, das in 1 molarer saurer wäßriger Lösung ein mindestens 200 mV positiveres Potential als die Normal-Wasserstoffelektrode aufweist.

2. Verfahren nach Anspruch 1, dadurch gekennzeichnet, daß sich das ein mindestens 200 mV positiveres Potential als die Normal-Wasserstoffelektrode aufweisende Metall auf einem metallischen Träger befindet.

3. Verfahren nach Anspruch 2, dadurch gekennzeichnet, daß der metallische Träger aus Eisen oder seinen Legierungen besteht.

4. Verfahren nach Anspruch 1, dadurch gekennzeichnet, daß das ein mindestens 200 mV positiveres Potential als die Normal-Wasserstoffelektrode aufweisende Metall auf einen nichtporösen, nichtmetallischen Träger aufgebracht ist.

5. Verfahren nach Anspruch 4, dadurch gekennzeichnet, daß der nichtmetallische Träger aus keramischem Material besteht.

6. Verfahren nach mindestens einem der Ansprüche 1 bis 5, dadurch gekennzeichnet, daß das ein mindestens 200 mV positiveres Potential als die Normal-Wasserstoffelektrode aufweisende Metall Kupfer oder seine Legierungen sind.

7. Verfahren nach mindestens einem Ansprüche 1 bis 5, dadurch gekennzeichnet, daß das ein mindestens 200 mV positiveres Potential als die Normal-Wasserstoffelektrode aufweisende Metall Silber ist.

8. Verfahren nach mindestens einem der Ansprüche 1 bis 5, dadurch gekennzeichnet, daß das ein mindestens 200 mV positiveres Potential als die Normal-Wasserstoffelektrode aufweisende Metall Gold ist.

9. Verfahren nach mindestens einem der Ansprüche 1 bis 5, dadurch gekennzeichnet, daß das ein mindestens 200 mV positiveres Potential als die Normal-Wasserstoffelektrode aufweisende Metall mindestens ein Platinmetall ist.

## Claims

1. A process for removing hydrogen phosphide from waste air by catalytic oxidation, which comprises passing the hydrogen phosphide-containing waste air at temperatures from 50 to 350°C, preferably from 150 to 300°C, over a catalyst which is composed, at least on its surface, of at least one metal which, in a 1-molar acidic aqueous solution, has a potential which is at least 200 mV more positive than that of the standard hydrogen electrode.

2. The process as claimed in claim 1, wherein the metal having a potential which is at least 200mV more positive than that of the standard hydrogen electrode is located on a metallic support.

3. The process as claimed in claim 2, wherein the metallic support is composed of iron or alloys thereof.

4. The process as claimed in claim 1, wherein the metal having a potential which is at least 200 mV more positive than that of the standard hydrogen electrode has been applied to a non-porous, non-metallic support.

5. The process as claimed in claim 4, wherein the non-metallic support is composed of a ceramic material.

6. The process as claimed in at least one of claims 1 to 5, wherein the metal having a potential which is at least 200 mV more positive than that of the standard hydrogen electrode is copper or an alloy thereof.

7. The process as claimed in at least one of claims 1 to 5, wherein the metal having a potential which is at least 200 mV more positive than that of the standard hydrogen electrode is silver.

8. The process as claimed in at least one of claims 1 to 5, wherein the metal having a potential which is at least 200 mV more positive than that of the standard hydrogen electrode is gold.

9. The process as claimed in at least one of claims 1 to 5, wherein the metal having a potential which is at least 200 mV more positive than that of the standard hydrogen electrode is at least one platinum metal.

## Revendications

1. Procédé de séparation de l'hydrogène phosphoré de l'air évacué par oxydation catalytique, caractérisé en ce qu'on envoie l'air évacué contenant l'hydrogène phosphoré, à des températures comprises entre 50 et 350°C, de préférence entre 150 et 300°C, sur un catalyseur formé au moins en surface d'au moins un métal présentant en solution aqueuse acide de 1 mole un potentiel supérieur d'au moins 200 mV à celui de l'électrode normale à l'hydrogène.

2. Procédé selon la revendication 1, caractérisé en ce que le métal présentant un potentiel supérieur d'au moins 200 mV à celui de l'électrode normale à l'hydrogène se trouve sur un support métallique.

3. Procédé selon la revendication 2, caractérisé en ce que le support métallique est en fer ou ses alliages.

4. Procédé selon la revendication 1, caractérisé en ce que le métal présentant un potentiel supérieur d'au moins 200 mV à celui de l'électrode normale à l'hydrogène est déposé sur un support non poreux, non métallique.

5. Procédé selon la revendication 4, caractérisé en ce que le support non métallique est en céramique.

6. Procédé selon au moins une des revendications 1 à 5, caractérisé en ce que le métal présentant un potentiel supérieur d'au moins 200 mV à celui de l'électrode normale à l'hydrogéne est du cuivre ou ses alliages.

7. Procédé selon au moins une des revendications 1 à 5, caractérisé en ce que le métal présentant un potentiel supérieur d'au moins 200 mV à celui de l'électrode normale à l'hydrogène est de l'argent.

8. Procédé selon au moins une des revendications 1 à 5, caractérisé en ce que le métal présentant un potentiel supérieur d'au moins 200 mV à celui de l'électrode normale à l'hydrogène est de l'or.

9. Procédé selon au moins une des revendications 1 à 5, caractérisé en ce que le métal présentant un potentiel supérieur d'au moins 200 mV à celui de l'électrode normale à l'hydrogène est au moins un métal du groupe du platine.